# EUROPÄISCHE PATENTSCHRIFT

(11) **EP 3 157 734 B1**
(45) Veröffentlichungstag und Bekanntmachung des Hinweises auf die Patenterteilung: **12.03.2025**
(21) Anmeldenummer: 15730134.2
(22) Anmeldetag: 17.06.2015
(51) Int. Cl.: B33Y 10/00, B33Y 40/00, B29C 64/129, B29C 64/321, B29C 64/286, B29C 64/35, B29C 64/357, B33Y 30/00, B29C 64/255

(54) **EFFIZIENTERES VERFAHREN ZUR HERSTELLUNG DREIDIMENSIONALER OBJEKTE MITTELS RAPID-PROTOTYPING**
METHOD FOR PRODUCING THREE-DIMENSIONAL OBJECTS BY RAPID PROTOTYPING WITH INCREASED EFFICIENCY
PROCÉDÉ POUR PRODUIRE DE MANIÈRE PLUS EFFICACE DES OBJETS TRIDIMENSIONNELS PAR PROTOTYPAGE RAPIDE

(30) Priorität: 18.06.2014 DE 102014108633
(43) Veröffentlichungstag der Anmeldung: 26.04.2017
(73) Patentinhaber: Kulzer GmbH, 63450 Hanau (DE)
(72) Erfinder: BAUER, Christian, 63825 Schöllkrippen (DE)
(74) Vertreter: Bendele, Tanja
(86) Internationale Anmeldenummer: PCT/EP2015/063561
(87) Internationale Veröffentlichungsnummer: WO 2015/193355

(56) Entgegenhaltungen:
- EP-A2- 0 348 061
- DE-A1- 4 414 775
- US-A- 6 051 179
- US-A1- 2002 164 069
- US-A1- 2007 284 547

## Beschreibung

Die Erfindung betrifft eine Vorrichtung gemäß Anspruch 1 und ein Verfahren gemäß Anspruch 7 zur Herstellung dreidimensionaler Objekte, insbesondere von zumindest Teilen dentaler, prothetischer Versorgungen, indem eine Abstreifeinrichtung in der Höhe über einem Behälter überstehenden Kunststoff in einen Auffangbehälter abstreift und eine Projektionsfläche bildet. Erfindungsgemäß werden eine Abstreifeinrichtung und eine Lichtquelle simultan mit einer definierten Beabstandung über den flüssigen, lichthärtenden Kunststoff geführt, wobei die Abstreifeinrichtung in einem definierten Abstand unmittelbar vor der Lichtquelle und/oder dem Belichtungsfeld hergeführt wird und die Projektionsfläche für das Belichtungsfeld der Lichtquelle ausbildet. Die Erfindung betrifft ebenfalls ein Verfahren zur Herstellung einer homogenisierten Lichtmengenverteilung mit einem Flächenlichtmodulator und ein Rapid-Prototyping-Verfahren, bei dem ein solches Verfahren zur Anwendung kommt.

Aus dem Stand der Technik ist eine Niveau-Regelung des Harzbehälters während des Bauprozesses bekannt. So wird beispielsweise über einen Sensor zur Oberflächenabtastung und einer Steuerung zum Anpassen der voreingestellten Höhe der Wanne (Höhe des Harzes) die Niveau-Regulierung gesteuert. Die Höhe des Harz-Füllstandes wird für jede Schicht kontrolliert und ggf. auf ein voreingestelltes Niveau eingeregelt. Anschließend wird der Bauprozess fortgeführt.

Es gibt auch Verfahren, in denen keine Reglung der Füllhöhe für den Prozess erforderlich ist. Diese Verfahren belichten die mit Harz gefüllte Wanne durch eine durchsichtige Schicht von unten. Das Bauteil wird schichtweise nach oben gezogen. Die Höhe des Füllstands dient nur zur Durchführung eines Bauprozesses und wird während der Bauphase nicht korrigiert. Ein solches Verfahren ist aus der EP 2337668 B1 bekannt.

Ferner gibt es eine Technologie, in der das Harz auf einer Salzwasserschicht schwimmt. Dieses Verfahren benötigt daher sehr wenig Harz und spart somit Material und eine mechanische Achse. Dieses ist beispielsweise bekannt für den Peachy Printer.

US6051179A offenbart eine Vorrichtung gemäß dem Oberbegriff des Anspruchs 1.

Aus der WO 95/31325 ist eine Vorrichtung bekannt, in der der Behälter einen Überlauf zum Einstellen des Niveaus des härtbaren Harzes aufweist. Der Überlauf kann V-förmig ausgebildet sein. Zum Auftragen einer Schicht dient eine oberhalb der Oberfläche befindliche Vorrichtung, die ein Glättglied umfassen kann. Diese Vorrichtung trägt eine neue, gleichmäßige Schicht des härtbaren Harzes auf. Nachteilig an diesem Verfahren ist die aufwendige Dosierung und Ansteuerung der Vorrichtung zum gleichmäßigen Auftragen der zu polymerisierenden Schicht.

DE4414775 A1 offenbart eine Vorrichtung zum Herstellen dreidimensionaler Objekte mit einem Abstreifer und einem im Behälter vorgesehenen Ein- und Auslass, über die beim Absenken des Trägers Material aus dem Bad an die Oberfläche transportiert wird. Der Behälter verfügt über einen Auslass, dessen Oberkante niedriger als die Oberkante des Behälters liegt. Nachteilig an der Vorrichtung ist auch hier eine weitere Positioniervorrichtung, die um den Betrag der Schichtdicke abgesenkt werden muss, um die Schichtdicke über dem Träger einzustellen (Spalte 3, Zeilen 4 bis 40). Das Material wird genau vor den Abstreifer gefördert, der es anschließend verteilt. Ein weiterer Nachteil ergibt sich aus dem Umstand, dass der Abstreifer erst das Material über dem Träger verteilen muss.

Ein weiterer Fokus der Rapid-Prototyping-Verfahren liegt auf den Lichtquellen. So kommen bei Rapid-Prototyping-Verfahren neben Ultraviolett-(UV)-Lasern auch zunehmend UV-LED-Beamer zum Einsatz. Verfahren hierzu sind beispielsweise aus der EP 1 880 830 A1 und der EP 1 894 705 A2 bekannt. Nachteilig an Lasern ist ihr punktförmiges Belichtungsfeld. Das UV-Licht der Lichtquelle wird auf einem lichthärtenden Kunststoff als Belichtungsfeld abgebildet. Bei der Abbildung werden eine Optik und ein Flächenlichtmodulator verwendet. Aufgrund der Optik kommt es zu einer inhomogenen Lichtverteilung beziehungsweise Intensitätsverteilung. Die Randbereiche des Belichtungsfelds haben dabei typischerweise eine niedrigere Intensität als die Bereiche im Zentrum des Belichtungsfelds. Dieser auch als Tonnenbild bezeichnete Effekt führt dazu, dass der lichthärtende Kunststoff nicht an jeder Stelle die gleiche Intensität erhält und daher unterschiedlich und also inhomogen aushärtet.

Die EP 1 982 824 A2 schlägt vor, die Intensitätsverteilung zu homogenisieren, indem die helleren Pixel des UV-Beamers auf das Intensitäts-Niveau der Pixel am Rand durch eine Grauverteilung reduziert werden.

Nachteilig ist hieran, dass die Grauverteilung nur durch eine genaue Steuerung der Intensität erreicht werden kann. Es ist also auch Aufgabe der Erfindung ein weniger aufwendiges Verfahren bereitzustellen, mit dem ein ähnlicher Effekt erzielt werden kann.

Die Aufgabe der Erfindung bestand darin, mit geringen konstruktiven Mitteln ein konstantes Niveau bezüglich der z-Achse an polymerisierbarem Material, wie einer Monomere umfassenden Zusammensetzung, bereitstellen zu können, ohne weitere Positioniervorrichtungen oder Messeinrichtungen zu benötigen. Ferner bestand die Aufgabe darin, eine konstante Füllhöhenregulierung zu ermöglichen. Zudem sollte eine Vorrichtung entwickelt werden, die einen schnelleren Bauprozess der dreidimensionalen Objekte erlaubt. Insbesondere soll ein weniger aufwendiges Verfahren bereitgestellt werden, in dem die Verfahrensschritte schneller durchgeführt werden können und insbesondere eine zufriedenstellende Homogenisierung der Lichtintensität des Belichtungsfelds erreicht. Das Verfahren soll möglichst kostengünstig realisierbar sein.

Die Aufgaben der Erfindung werden gelöst durch eine Vorrichtung nach Anspruch 1 sowie ein Verfahren nach Anspruch 7, in dem der lichthärtende Kunststoff, an der Oberkante der Wände des Behälters mittels einer Abstreifeinrichtung entlang der Projektionsfläche planar entfernt wird. Dabei ist der Kunststoff vorzugsweise ein lichthärtender Kunststoff, wie eine Zusammensetzung umfassend mit elektromagnetischer Strahlung polymerisierbarer Monomere, bevorzugt dentaler, UVpolymerisierbarer Monomere.

Gegenstand der Erfindung ist eine Vorrichtung, umfassend insbesondere eine Baueinheit mit einer Lichtquelle, insbesondere zum Herstellen einer homogenisierten Lichtmengenverteilung, zum Herstellen eines dreidimensionalen Objektes mittels Belichtung eines flüssigen, lichthärtenden Kunststoffes, mit einem Behälter zur Aufnahme eines Bades des lichthärtenden, flüssigen Kunststoffes, einer Bauplattform zur Positionierung des Objektes relativ zur Oberfläche (z-Achse) des Bades, wobei dem Behälter eine Zuführeinrichtung zum Zuführen des flüssigen, lichthärtenden Kunststoffes zugeordnet ist, insbesondere ist die Zuführeinrichtung unterhalb der Oberfläche des Bades dem Behälter zugeordnet, wobei die Zuführeinrichtung eine Austrittsöffnung im Behälter und eine Leitung umfasst, wobei die Leitung mit einer Pumpe verbunden ist, ferner ist dem Behälter mindestens ein Auffangbehälter zugeordnet, insbesondere sind dem Behälter zwei gegenüberliegende Auffangbehälter seitlich des Behälters, insbesondere seitlich entlang der Längs- oder Querachse des Behälters, zugeordnet. In den mindestens einen Auffangbehälter ist der flüssige, lichthärtende Kunststoff, vorzugsweise der überstehende Kunststoff mit einer gewölbten Oberfläche, mittels einer entlang einer Achse des Behälters verfahrbaren Abstreifeinrichtung, vorzugsweise in eine planare Oberfläche, überführbar. Die verfahrbare Abstreifeinrichtung umfasst vorzugsweise einen Rakel, der eine planare Unterseite aufweist. Der Rakel kann eine Gummilippe aufweisen.

Die erfindungsgemäße Vorrichtung ist derart konzipiert, dass sie erstmals die Oberflächenspannung des lichthärenden Kunststoffes bzw. einer polymerisierbaren Zusammensetzung nutzt, um den härtbaren Kunststoff oberhalb der letzten gehärteten Schicht oder oberhalb der Bauplattform im Überschuss vorzusehen. Erst anschließend wird eine Abstreifeinrichtung, die in einem definierten Abstand zur Oberkante des Behälters bspw. einem Höhenunterschied von 0,1 mm fest ausgerichtet ist, zur Einstellung der planaren Kunststoffoberfläche eingesetzt.

Dabei ist es besonders bevorzugt, wenn in der Vorrichtung der flüssige, lichthärtende Kunststoff, insbesondere der in der Höhe oberhalb der Wände des Behälters überstehende Kunststoff, der aufgrund der Oberflächenspannung des Kunststoffes eine gewölbte Oberfläche aufweist, mittels einer entlang einer Achse, insbesondere Längs- oder Querachse, wie Längsmittelachse, des Behälters verfahrbaren Abstreifeinrichtung in mindestens einen Auffangbehälter überführbar ist, wobei sich insbesondere eine Oberfläche, vorzugsweise eine planare Oberfläche, als Projektionsfläche ausbildet.

Erfindungsgemäß wird die flächig abstrahlenden Lichtquelle, zusammen mit dem über eine Optik abgebildet Belichtungsfeld der abgebildeten Lichtquelle über eine Projektionsfläche geführt, wobei die Lichtquelle entlang einer Achse des Behälters simultan mittels einer entlang einer Achse, insbesondere Längs- oder Querachse, des Behälters verfahrbaren Abstreifeinrichtung geführt wird. Eine erfindungsgemässe Vorrichtung umfasst somit vorzugsweise eine Gesamtbaueinheit, die eine entlang einer Achse des Behälters verfahrbare Abstreifeinrichtung und Baueinheit 0 umfasst, wobei sich die Abstreifeinrichtung vor der Lichtquelle und/oder dem Belichtungsfeld, insbesondere der Baueinheit, befindet und, wobei die Lichtquelle simultan mittels der entlang einer Achse des Behälters verfahrbaren Abstreifeinrichtung entlang der Achse des Behälters geführt wird.

Ferner ist Gegenstand der Erfindung eine Vorrichtung umfassend eine Baueinheit (0), die eine Anordnung umfasst, wobei die Anordnung eine flächig abstrahlende Lichtquelle, einen Flächenlichtmodulator und eine Optik umfasst. Dabei bildet ein Linsensystem vorzugsweise die Optik. Die Lichtquelle kann ein UV-Laser oder ein Beamer, wie ein UV-LED-Beamer sein.

Nach einer weiteren Ausführungsform ist Gegenstand der Erfindung eine Vorrichtung mit einer Zuführeinrichtung, die unterhalb der Oberfläche des Bades dem Behälter zugeordnet ist, insbesondere weist die Zuführeinrichtung eine Austrittsöffnung im Behälter auf und umfasst eine Leitung, die die Austrittsöffnung und eine Pumpe verbindet. Die Austrittsöffnung liegt vorzugsweise unterhalb der Oberfläche des Bades.

Ebenso Gegenstand der Erfindung ist eine Vorrichtung mit der der flüssige, lichthärtende Kunststoff aus dem Auffangbehälter mittels einer Saugleitung, insbesondere durch einen Filter, mittels einer Pumpe, vorzugsweise einer Schlauchpumpe oder Membranpumpe, über die Zuführeinrichtung erneut dem Bad zugeführt wird. Dabei ist besonders auf eine blasenfreie Zuführung zu achten.

Entsprechend einer besonders bevorzugten Ausführungsform der Erfindung umfasst die Vorrichtung eine Baueinheit 0# - gesamte Baueinheit - umfassend eine entlang einer Achse (x, y-Ebene) des Behälters verfahrbare Abstreifeinrichtung und eine kleinere Baueinheit, wobei sich die Abstreifeinrichtung vor der Lichtquelle der Baueinheit 0 befindet. Die Abstreifeinrichtung ist einem definierten Abstand vor der Lichtquelle angebracht, insbesondere 20 bis 150 mm, bevorzugt 20 bis 80 mm. Vorzugsweise bilden die verfahrbare Abstreifeinrichtung und die Lichtquelle der Baueinheit 0 eine koppelbare, verfahrbare gesamte Baueinheit/Gesamtbaueinheit 0#. Entsprechend einer bevorzugten Ausführungsform weist die Abstreifeinrichtung eine Koppelvorrichtung auf und wird mittels eines Schwertes, das der Lichtquelle oder der Baueinheit 0 zugeordnet ist, vor der Lichtquelle und/oder dem Belichtungsfeld der Lichtquelle hergeschoben. Das Schwert kann vorzugsweise im Bereich der Umkehrpunkte der Baueinheit am Behälter an dem vorderen und hinteren Ende des Behälters durch eine Koppelvorrichtung hindurchgeführt werden, um auf diese Weise beim erneuten Verfahren der gesamten Baueinheit 0# entlang des Rückweges über den Behälter die Abstreifeinrichtung wieder vor der Lichtquelle zu positionieren. Indem ein Schwert der Lichtquelle oder der Baueinheit 0 zugeordnet ist und an den Endpunkten (Umkehrpunkten der gesamten Baueinheit 0# im Behälter) durch die Koppelvorrichtung des Abstreifers hindurchgeführt wird, kann das Schwert bei einem Richtungswechsel der Baueinheit die Koppelvorrichtung und damit die Abstreifeinrichtung vor der Lichtquelle und/oder dem Belichtungsfeld herschieben. Vorzugsweise ist die Koppelvorrichtung eine Vorrichtung umfassend zwei Elemente, insbesondere etwa trapezförmige Elemente, vorzugsweise symmetrische mindestens ein Trapez enthaltende Elemente, die mit Federn aneinander gedrückt werden können. Die Elemente sind vorzugsweise derart gebildet und zueinander ausgerichtet, dass sich zwischen Ihnen in horizontaler Ebene eine Kerbe ausbildet, die das Schwert durch Auseinanderdrücken der beiden gefedert gelagerten Elemente zu einem Spalt aufweiten kann. Durch diesen Spalt kann das Schwert im Bereich des Umkehrpunktes geschwenkt werden, um erneut beim Rückführen der gesamten Baueinheit 0# die Koppelvorrichtung vor dem Schwert über die Oberfläche des Kunststoffes führen zu können. An den Umkehrpunkten ist ein Dämpfer positioniert, der das Rakel (Wischer, Schieber) anhält und solange Druck aufbaut, bis sich das Schwert durch die vorgenannten Kerbe der Koppelvorrichtung und den sich bildenden Spalt schiebt. Sobald das Schwert auf der gegenüberliegenden Seite der Koppelvorrichtung angeordnet ist, kann die Baueinheit 0 das Rakel erneut in der entgegengesetzten Richtung über den Behälter schieben.

Die Unterkante(n) der Abstreifeinrichtung werden in einem definierten Abstand zu den planaren Oberkanten der seitlichen Wände des Behälters eingestellt, vorzugsweise kann beispielsweise ein Abstand von 0,1 mm voreingestellt werden. Alternativ kann die Abstreifeinrichtung über die planaren Oberkanten der seitlichen Wände des Behälters geführt werden.

Die Baueinheit 0 - kleine Baueinheit - umfasst eine Anordnung, umfassend eine flächig abstrahlende Lichtquelle, einen Flächenlichtmodulator sowie die Optik, die vorzugsweise ein Linsensystem ist. Die Lichtquelle kann ein UV-Laser oder einen Beamer umfassen. Der Beamer kann beispielsweise ein Beamer mit DLP (Digital Light Processor) Technologie der Fa. Visitech AS sein. Bevorzugt wird ein Mikrospiegelreaktor bei der DLP-Technik eingesetzt. Die optische Leistung der UV-Lichtquelle liegt vorzugsweise im Bereich von 0,5 bis 100 W. Bevorzugte Emissionswellenlängen der Lichtquelle sind 340 nm bis 500 nm.

Entsprechend einer besonders bevorzugten Ausführungsform der Erfindung wird die Abstreifeinrichtung simultan zusammen mit der Lichtquelle vor dem Belichtungsfeld der Lichtquelle entlang einer Achse des Behälters (x-, y-Ebene) geführt, um die zu polymerisierende Schicht (x1, y1) des Kunststoffs als Projektionsfläche zu bilden, auf der das Belichtungsfeld abgebildet wird und der Kunststoff durch die Belichtung im Belichtungsfeld polymerisiert. Unter simultan im Sinne der Erfindung wird ein gleichzeitiges Führen der Abstreifeinrichtung und der Lichtquelle entlang einer Achse des Behälters verstanden. Schritt a), die Niveau-Regulierung des Bades und Erzeugung der gewölbten Oberfläche, erfolgt erfindungsgemäß vorzugsweise im Umkehrpunkt des Belichtungsprozesses bzw. im Verfahrensschritt in dem die Baueinheit ihren Umkehrpunkt aufweist.

Ebenso Gegenstand der Erfindung ist ein Verfahren gemäß Anspruch 7 zum Herstellen eines dreidimensionalen Objektes, insbesondere von zumindest einem Teil eines dentalen prothetischen Teils, sowie prothetische Teile erhältlich nach diesem Verfahren, in dem das dreidimensionale Objekt, wie ein dentales prothetisches Teil, schichtweise erzeugt wird, indem jeweils eine Schicht (x1, y1) als Projektionsfläche eines flüssigen, lichthärtenden Kunststoffes hergestellt wird, und in einem Belichtungsfeld zumindest teilweise mittels Licht einer flächig abstrahlenden Lichtquelle, polymerisiert wird, wobei
a) eine Schicht (x, y) des flüssigen, lichthärtenden Kunststoffes auf einer Bauplattform bzw. Halterung oder auf einer polymerisierten Schicht erzeugt wird, indem in einem Bad des flüssigen, lichthärtenden Kunststoffs die Menge des Kunststoffes so eingestellt wird, dass
   i) an der Oberkante der seitlichen Wände des Behälters der Kunststoff in der Höhe (z-Achse) durch die Oberflächenspannung des Kunststoffs übersteht und in den mindestens einen seitlich des Behälters angeordneten Auffangbehälter fließt und sich eine gewölbte Oberfläche des überstehenden Kunststoffs bildet oder
   ii) der Kunststoff an der Oberkante der Wände des Behälters in der Höhe (z-Achse) durch die Oberflächenspannung des Kunststoffes übersteht und sich eine gewölbte Oberfläche ausbildet, und optional fließt der Kunststoff in den mindestens einen seitlich des Behälters angeordneten Auffangbehälter, nachfolgend wird
b) der überstehende, flüssige, lichthärtende Kunststoff der gewölbten Oberfläche mittels einer entlang einer Achse, insbesondere der Längs- oder Quermittelachse (x-, y-Ebene), des Behälters verfahrbaren Abstreifeinrichtung entfernt, und eine zu polymerisierenden Schicht (x1, y1) erhalten wird, insbesondere eine planare Oberfläche, und optional wird,
c) die in b) erzeugte zu polymerisierende Schicht (x1, y1) als Projektionsfläche des flüssigen, lichthärtenden Kunststoffes mit einem Belichtungsfeld mittels Licht einer flächig abstrahlenden Lichtquelle, polymerisiert, und optional erfolgt ein
d) Absenken der Bauplattform um eine Schichtdicke (z1) und optional werden ferner in
e) die Schritte a) bis d) mindestens ein- bis mehrmalig wiederholt.

Die Bauplattform dient der Justierung der z-Achse für den schichtweisen Aufbau der Objekte.

Das Verfahren kann statisch erfolgen. Bei einem statischen Verfahren wird der verfahrbare Abstreifer entlang einer Achse des Behälters verfahren. Die Belichtung erfolgt mittels einer statischen Lichtquelle. Entsprechend einer besonders bevorzugten Alternative der Erfindung ist die Lichtquelle jedoch entlang einer Achse des Behälters verfahrbar und zudem vorzugsweise mit dem Abstreifer bzw. der Abstreifeinrichtung koppelbar. Entsprechend einer besonders bevorzugten Ausführungsvariante werden die Schritte b) und c) simultan durchgeführt. Die simultane Durchführung des Ausbildens der planaren Oberfläche als Projektionsfläche und die unmittelbar anschließende Belichtung kann erfolgen, indem erfindungsgemäß eine verfahrbare Abstreifeinrichtung und die Lichtquelle eine koppelbare, verfahrbare Gesamtbaueinheit 0# bilden, d.h. die Abstreifeinrichtung und die Lichtquelle oder die Baueinheit 0 - kleine Baueinheit - sind aneinander- und entkoppelbar, insbesondere mechanisch, magnetisch und/oder elektrisch, und bilden die Gesamtbaueinheit 0#.

Ferner ist Gegenstand der Erfindung ein Verfahren in dem die Baueinheit 0# - Gesamtbaueinheit - eine verfahrbare Abstreifeinrichtung und eine Baueinheit 0 - kleine Baueinheit - aufweist, wobei die Baueinheit 0 eine Anordnung umfassend eine flächig abstrahlende Lichtquelle, einen Flächenlichtmodulator und die Optik aufweisen, insbesondere bildet ein Linsensystem die Optik.

Ein weiterer Vorteil des erfindungsgemäßen Verfahrens besteht darin, dass der flüssige, lichthärtende Kunststoff aus dem Auffangbehälter erneut dem Bad zugeführt werden kann. Erfindungsgemäß ist es bevorzugt, wenn die Vorrichtung vor elektromagnetischer Strahlung geschützt wird oder in einem Dunkelraum steht.

Weiter ist es bevorzugt, wenn das Verfahren mit den Schritten durchgeführt wird, indem Schritt a) durchgeführt wird, i) nachdem der Schritt d) durchgeführt wurde, oder ii) nachdem der Schritt c) und vorzugsweise d) durchgeführt wurden, oder iii) nachdem die verfahrbare Abstreifeinrichtung, die Lichtquelle oder die gesamte Baueinheit 0# über das Belichtungsfeld geführt wurden und sich außerhalb des Belichtungsfeldes befinden, oder iv) nachdem die verfahrbare Abstreifeinrichtung, die Lichtquelle oder die gesamte Baueinheit 0# sich an einem vorderen oder hinteren Ende des Behälters, insbesondere im Bereich des Umkehrpunktes, befinden. Als vorne und hinten gelten die Bereiche der seitlichen Wände des Behälters in denen der Abstreifer und die Lichtquelle ihre Umkehrpunkte haben. Erfindungsgemäß ist es bevorzugt, dass die Regelung des Niveaus des Füllstands, wie in Schritt a) in den Umkehrpunkten des Belichtungsprozesses erfolgt.

Nach einer bevorzugten Ausführungsvariante können die Oberkanten der Wände des Behälters und die Unterkante der Abstreifeinrichtung in der Ebene der Projektionsfläche liegen.

Weiter ist es bevorzugt, wenn die Baueinheit zur Homogenisierung der Lichtmengenverteilung einen Flächenlichtmodulator aufweist, der eine Vielzahl von in Reihen und Spalten angeordneten ansteuerbaren kippbaren Mikrospiegeln aufweist, bei dem das Licht einer flächig abstrahlenden Lichtquelle über eine Optik abgebildet wird und ein Belichtungsfeld der abgebildeten Lichtquelle über eine Projektionsfläche geführt wird, die Projektionsfläche stellt vorzugsweise die Schicht (x1, y1) dar, wobei eine zur Mitte des Belichtungsfelds hin zunehmende Anzahl von Pixeln nicht belichtet wird, so dass im zeitlichen Integral eine Homogenisierung der Lichtintensität aller auf der Projektionsfläche belichteten Pixel erreicht wird.

Gleichfalls ist Gegenstand der Erfindung ein Verfahren in dem die Baueinheiten 0# oder 0 und damit das Belichtungsfeld und die Abstreifeinrichtung simultan periodisch über die Projektionsfläche geführt werden, wobei vorzugsweise als Projektionsfläche die Oberfläche eines flüssigen lichthärtenden Kunststoffs verwendet wird, insbesondere die Schicht (x1, y1).

Entsprechend einem weiteren Gegenstand der Erfindung wird ein Rapid-Prototyping-Verfahren beansprucht, in dem ein flüssiger lichthärtender Kunststoff nach einem vorstehend beschriebenen Verfahren belichtet wird, vorzugsweise mit UV-Licht belichtet, wobei die Abstreifeinrichtung simultan zusammen mit dem Belichtungsfeld vor dem Belichtungsfeld einer Achse (x, y- Ebene) des Behälters geführt wird, insbesondere über den Behälter geführt wird, um die zu polymerisierende Schicht (x1, y1) des Kunststoffs als Projektionsfläche zu bilden, auf der das Belichtungsfeld abgebildet wird und der Kunststoff durch die Belichtung im Belichtungsfeld polymerisiert.

Ebenso Gegenstand der Erfindung ist die Verwendung einer erfindungsgemäßen Vorrichtung zur Herstellung von zumindest Teilen dentaler prothetischer Versorgungen.

Ebenso kann das Verfahren modifiziert werden, indem zur Herstellung einer homogenisierten Lichtmengenverteilung ein Flächenlichtmodulator verwendet wird, der eine Vielzahl von in Reihen und Spalten angeordneten ansteuerbaren kippbaren Mikrospiegeln aufweist, bei dem das Licht einer flächig abstrahlenden Lichtquelle über eine Optik abgebildet wird und ein Belichtungsfeld der abgebildeten Lichtquelle mit dem Flächenlichtmodulator über eine Projektionsfläche geführt wird, wobei eine zur Mitte des Belichtungsfelds hin zunehmende Anzahl von Pixeln nicht belichtet wird, so dass im zeitlichen Integral eine Homogenisierung der Lichtintensität aller auf der Projektionsfläche belichteten Pixel erreicht wird.

Als Pixel wird im Rahmen der vorliegenden Erfindung eine kleinste anzusteuernde Lichtquelle verstanden, aus denen das Bild des Beamers zusammengesetzt ist.

Als Flächenlichtmodulatoren können beispielsweise die besonders gut geeigneten DLP^{®} Chips der Firma Texas Instruments oder Visitech eingesetzt werden.

Erfindungsgemäß kann vorgesehen sein, dass als flächig abstrahlende Lichtquelle ein Beamer, bevorzugt ein LED-Beamer, besonders bevorzugt ein UV-LED-Beamer verwendet wird. Alternativ kann ein Lasersystem verwendet werden.

Sowohl der Beamer als auch das Lasersystem strahlen vorzugsweise Licht einer Wellenlänge ausgewählt von 180 bis 600 nm ab, vorzugsweise von 230 bis 500 nm, besonders bevorzugt sind 340 bis 500 nm. Generell können polychromatische Lichtquellen als Beamer verwendet werden, wobei jedoch monochromatische Lichtquellen oder auch im Wesentlichen monochromatische Lichtquellen besonders bevorzugt sind. Durch Verwendung von monochromatischen Lichtquellen kann die Lichtintensität bzw. Strahlungsintensität vereinheitlicht und damit eine homogenere Polymerisation erzielt werden. Besonders bevorzugt sind LED-UV-Beamer mit einer Wellenlänge um 385 nm oder Lasersysteme mit einem Laser mit einer Wellenlänge um 285 nm. Bevorzugt sind Beamer mit einer Auflösung von größer gleich 1024x800, bevorzugt größer gleich 1920x1080 Pixel, insbesondere hochauflösenden mit bis zu 100.000 oder mehr Pixeln. Besonders bevorzugt werden flächig abstrahlende Lichtquellen mit kohärenten Lichtstrahlen verwendet. Eine räumliche Kohärenz wird auch durch einen sehr geringen Abstand der Lichtquelle 1 und/oder der Baueinheit 0 vom Belichtungsfeld 5 erzielt.

Als geringer Abstand der flächigen Lichtquelle, Anordnung und/oder der Baueinheit vom Belichtungsfeld gelten 3 mm bis 500 mm, insbesondere 3 mm bis 250 mm, besonders bevorzugt 3 mm bis 150 mm, vorzugsweise 3 mm bis 50 mm, alternativ kann der Abstand auch 1 mm bis 50 mm betragen. Erfindungsgemäß bilden die flächig abstrahlende Lichtquelle, der Flächenlichtmodulator und die Optik, insbesondere ein Linsensystem, eine Anordnung. Die flächig abstrahlende Lichtquelle, der Flächenlichtmodulator und die Optik, insbesondere ein Linsensystem, liegen zudem als Anordnung in einer Baueinheit vor.

Dabei kann vorgesehen sein, dass durch eine für die Ansteuerung des Beamers hinterlegte Maske, insbesondere eine programmierbare Maske, die nicht-belichteten Pixel definiert werden, indem bestimmte Leuchtpunkte des Beamers immer ausgeschaltet bleiben. Eine Maske nach der Erfindung entspricht einem Motiv der ausgeschalteten Leuchtpunkte der Lichtquelle, wobei sich das Motiv im Belichtungsfeld als nicht-belichtete Pixel darstellt, insbesondere als statisches Motiv nicht-belichteter Pixel.

Durch die hinterlegte Maske wird auf einfachste Weise erreicht, dass die Lichtintensität in bestimmten Bereichen des Belichtungsfelds reduziert wird. Mit dieser Maske kann dann eine Homogenisierung des Belichtungsfelds, insbesondere eine Homogenisierung der Lichtintensität des Belichtungsfelds, besonders bevorzugt eine Homogenisierung im zeitlichen Integral der Lichtintensität des Belichtungsfelds, erreicht werden.

Alternativ zur Verwendung einer hinterlegten Maske kann auch vorgesehen sein, dass durch eine Schwärzung der Mikrospiegel oder durch einen Flächenlichtmodulator mit Lücken in der Besetzung mit Mikrospiegeln oder durch Umlenken der Leuchtpunkte durch die Mikrospiegel die nicht-belichteten Pixel definiert werden.

Durch ein Weglassen einzelner Mikrospiegel können die Kosten für den Flächenlichtmodulator beziehungsweise die Anzahl der notwendigen Anschlüsse reduziert werden. Bei Verwendung einer Schwärzung kann auf handelsübliche vollflächig besetzte Flächenlichtmodulatoren zurückgegriffen werden.

Mit einer Weiterbildung des erfindungsgemäßen Verfahrens kann auch vorgesehen sein, dass die Anzahl der nicht belichteten Pixel zur Mitte hin nach Maßgabe einer Funktion zunimmt, vorzugsweise linear oder nach Maßgabe einer Parabel, besonders bevorzugt nach einer Funktion, die die auftretenden Interferenzen berücksichtigt, vorzugweise nach einer Funktion die die Kohärenz am Belichtungsfeld, vorzugsweise des zu belichtenden bzw. zu druckenden Motivs verbessert.

Hierdurch sind die aufgrund der Optik typischerweise auftretenden Abweichungen in der Intensität des Belichtungsfelds besonders gut auszugleichen. Eine solche Funktion kompensiert die Intensitätszunahme in der Mitte des Belichtungsfelds besonders gut.

Dabei kann vorgesehen sein, dass die Funktion in Abhängigkeit von der durch die Optik, insbesondere ein Linsensystem, verursachten Inhomogenität des Belichtungsfelds bestimmt wird, vorzugsweise berechnet wird.

Bevorzugt wird die Funktion in Abhängigkeit von der durch die flächige Lichtquelle, die Anordnung, umfassend die flächige Lichtquelle, den Flächenlichtmodulator und/oder die Optik, verursachten Inhomogenität des Belichtungsfelds bestimmt, vorzugsweise berechnet. Alternativ wird die Funktion Abhängigkeit von der durch die Baueinheit umfassend die Lichtquelle verursachten Inhomogenität berechnet.

Die Funktion, nach der die Anzahl der nicht belichteten Pixel zur Mitte des Belichtungsfelds zunimmt, wird ermittelt als Funktion einer Referenz 1, die die ursprüngliche Lichtintensität der Lichtquelle im Belichtungsfeld auf der Projektionsfläche (Ebene) angibt, und mit der Referenz 2, die die homogene, flächige Lichtintensität (Energiedichte in der Ebene, gemittelt über x-Pixel) der Projektionsfläche angibt, korreliert, insbesondere über 12x13 bis 1920x1080 Pixel. Die Projektionsfläche kann auch eine größere Auflösung an Pixel umfassen.

Auch diese Maßnahme dient dazu, einen möglichst genauen Ausgleich der baubedingten Fehler in der Intensitätsverteilung auszugleichen und damit ein möglichst homogenes Belichtungsfeld zu erzeugen.

Gemäß einer besonders bevorzugten Ausführungsform des erfindungsgemäßen Verfahrens kann auch vorgesehen sein, dass die Intensitätsverteilung des Belichtungsfelds bei maximaler Belichtung durch die Lichtquelle und den Flächenlichtmodulator gemessen oder berechnet wird und daraus die Anzahl der nicht belichteten Pixel in jeder Zeile und/oder Spalte ermittelt wird.

Hiermit wird ein besonders gut geeignetes Verfahren bereitgestellt, mit dem auch spezifische Intensitätsabweichungen bestimmter Lichtquellen, wie Beamer-Typen oder einzelner Beamer auf einfache Art ausgeglichen werden können.

Gemäß der Erfindung kann vorgesehen sein, dass die flächig abstrahlende Lichtquelle, bevorzugt die Anordnung, umfassend die flächig abstrahlende Lichtquelle und/oder die Baueinheit, umfassend eine flächig abstrahlende Lichtquelle, über die Projektionsfläche geführt wird, um das Belichtungsfeld der abgebildeten Lichtquelle über die Projektionsfläche zu führen, wobei das Belichtungsfeld vor und zurück über die Projektionsfläche geführt werden kann. Dies kann kontinuierlich oder diskontinuierlich erfolgen. Bevorzugt wird die Baueinheit periodisch über die Projektionsfläche geführt.

Hierdurch wird eine besonders leicht umzusetzende Methode bereitgestellt, um das Verfahren beim Rapid-Prototyping umzusetzen. Diese Methode ist weniger fehleranfällig als andere Methoden, insbesondere denen, in denen nur das Belichtungsfeld über die Projektionsfläche geführt wird.

Mit einer Weiterbildung des erfindungsgemäßen Verfahrens wird vorgeschlagen, dass das Belichtungsfeld periodisch über die Projektionsfläche geführt wird. Durch das periodische Überstreichen der Projektionsfläche wird eine gleichmäßigere Intensität entlang der Bewegungsrichtung des Belichtungsfelds erreicht.

Die belichtenden Motiveinzelbilder werden durch eine Überlagerung a) der extrahierten Motiveinzelbilder, d.h. abgeleitet aus dem zu druckenden Motiv, dargestellt als einzelne Motive im Scrollvorgang bzw. Führen der Anordnung, umfassend die Lichtquelle über die Projektionsfläche mit b) dem Motiv der ausgeschalteten Leuchtpunkte oder dem Motiv der Maske erhalten. Die Lichtintensität der belichtenden Motiveinzelbilder ist, im Vergleich zur Belichtung ohne Flächenlichtmodulator oder Maske, homogenisiert.

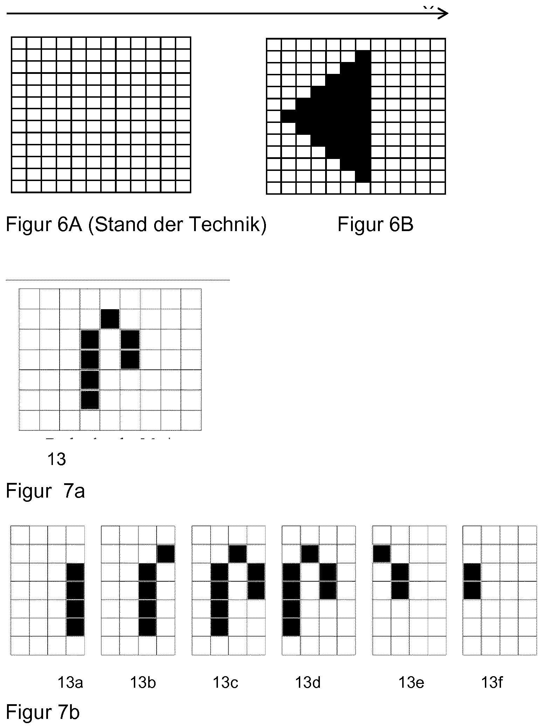

Nach einer besonders bevorzugten Ausführungsvariante werden in dem Verfahren im Belichtungsfeld belichtete Motiveinzelbilder erzeugt, indem eine Überlagerung a) von extrahierten Motiveinzelbildern mit b) dem Motiv der ausgeschalteten Leuchtpunkte erfolgt. Die extrahierten Motiveinzelbilder entsprechen dem zu druckenden Motiv, das in Motiveinzelbilder für den Scrollvorgang zerlegt wurde (Figur 7b).

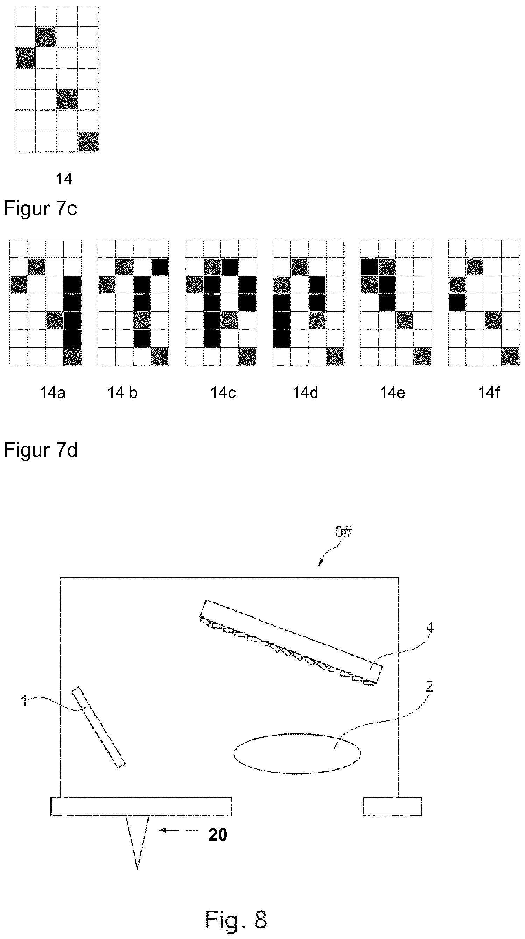

Das Motiv der ausgeschalteten Leuchtpunkte (Figur 7c) zeigt die nicht-belichteten Pixel, das statische Motiv von nicht-belichteten Pixeln. Die belichtenden Motiveinzelbilder (Figur 7d) werden erhalten durch eine Überlagerung der jeweiligen Motiveinzelbilder (extrahierte Motiveinzelbilder, Figur 7b) mit dem statischen Motiv der ausgeschalteten Leuchtpunkte, dargestellt als statisches Motiv mit nicht-belichteten Pixeln.

Das zu druckende Motiv wird durch ein Führen des Belichtungsfeldes mit den belichteten Motiveinzelbildern über die Projektionsfläche erhalten.

Es kann auch vorgesehen sein, dass als Projektionsfläche die Oberfläche eines flüssigen lichthärtenden Kunststoffs verwendet wird. Insbesondere wird ein lichthärtendes dentales Material als lichthärtender Kunststoff verwendet. Erfindungsgemäß sind das Initiatorsystem des lichthärtenden Kunststoffes und die Wellenlänge der Lichtquelle optimal aufeinander abgestimmt.

Als ein lichthärtender Kunststoff gilt ein Harz oder vorzugsweise eine Mischung von lichthärtenden Monomeren, umfassend optional Photoinitatoren oder ein Photoinitiatorsystem. Besonders bevorzugt werden dentale, lichthärtende Kunststoffe in dem erfindungsgemäßen Verfahren eingesetzt. Die dentalen, lichthärtenden Kunststoffe können ferner Füllstoffe umfassen und umfassen in der Regel Alkyl(meth)acrylate. Bei der Verwendung eines flüssigen lichthärtenden Kunststoffs als Projektionsfläche ist das Verfahren zur Herstellung von dreidimensionalen Formkörpern (synonym Objekte) (als sogenanntes Rapid-Prototyping Verfahren) geeignet. Die der Erfindung zugrundeliegenden Aufgaben werden auch gelöst durch ein Rapid-Prototyping-Verfahren, bei dem ein flüssiger lichthärtender Kunststoff mit einem solchen Verfahren belichtet wird, vorzugsweise mit UV-Licht belichtet wird, wobei das Belichtungsfeld auf die Oberfläche des Kunststoffs abgebildet wird und der Kunststoff durch die Belichtung im Belichtungsfeld aushärtet.

Das erfindungsgemäße Verfahren zur Homogenisierung der Lichtintensität des Belichtungsfelds wirkt sich besonders bei Rapid-Prototyping-Verfahren aus, da dadurch die erzeugten Objekte bzw. Kunststoffkörper homogen aufgebaut werden können.

Der Erfindung liegt die überraschende Erkenntnis zugrunde, dass es durch das Verwenden von toten beziehungsweise immer-schwarzen Pixeln, das heißt nicht-leuchtenden Pixeln, gelingt, eine Homogenisierung der UV-Lichtintensität zu erreichen, ohne dass hierzu Grauwerte mit der Flächenlichtquelle eingestellt werden müssten. Dabei kann eine einmal definierte Maske verwendet werden, welche in einem Beamer, bevorzugt in einem UV-Beamer hinterlegt ist. Die Anzahl der in den Zeilen beziehungsweise Spalten schwarz definierten Pixel, hier nicht-leuchtenden Pixel, steigt dabei zur Mitte des Belichtungsfelds an, um die Intensitätsabschwächung des Belichtungsfelds zum Rand hin aufgrund der Optik auszugleichen. Dies ist notwendig, da die mittleren Zeilen (beziehungsweise Spalten) konstruktionsbedingt (aufgrund der Optik) heller belichtet sind.

Durch das erfindungsgemäße Verfahren wird der folgende Effekt erzielt. Durch die Bewegung des Beamers beziehungsweise der vom Beamer ausgehenden Strahlung, wird bei einer Belichtung die komplette Zeile des Belichtungsfelds angesteuert. Dadurch wird beim Überfahren eine maximale Lichtmenge (UV-Lichtmenge) erzeugt. Bei einem Belichtungsfeld mit beispielsweise 1920x1080 Pixeln würde die maximale Lichtmenge mit 1080 Pixeln erzeugt werden. Werden weniger Pixel angesteuert, so wird die Leistung beziehungsweise die zeitlich integrierte Lichtintensität gemindert. Auf diese Weise wird erfindungsgemäß die ungleiche Ausleuchtung der Optik ausgeglichen.

Im Folgenden werden Ausführungsbeispiele der Erfindung anhand von schematisch dargestellten Figuren erläutert. Dabei zeigt:
- Figur 1:: Vorrichtung der Erfindung mit gewölbter Oberfläche 21a des polymerisierbaren Kunststoffes.
- Figur 2:: Vorrichtung der Erfindung mit planarer Oberfläche 21b des polymerisierbaren Kunststoffes.
- Figuren 3a, 3b und 4:: Kupplungsvorrichtung und Kupplungselement
- Figur 5:: einen schematischen Aufbau in Querschnittansicht zur Umsetzung eines erfindungsgemäßen Verfahrens; und
- Figur 6:: einen schematischen Vergleich eines voll belichteten UV-Beamer-Chips nach dem Stand der Technik (Figur 6A) im Vergleich zu einem erfindungsgemäß betriebenen UV-Beamer-Chip (Figur 6B).
- Figur 7a:: ein zu druckendes Motiv (13), wobei die Leuchtpunkte als schwarze Pixel dargestellt sind,
- Figur 7b:: die von der Lichtquelle (1) des Beamers einzeln dargestellten Bilder (extrahierte Motiveinzelbilder (13a, 13 b, 13c, 13d, 13e, 13f) zur Erzeugung des zu druckenden Motivs (13) während der Bewegung der Lichtquelle über die Projektionsfläche (ohne Maske), wobei die Leuchtpunkte als schwarze Pixel dargestellt sind.
- Figur 7c:: ein Motiv der ausgeschalteten Leuchtpunkte (14), die über eine Maske erzeugt wird oder durch den Flächenlichtmodulator erzeugten ausgeschaltete Leuchtpunkte zum Angleichen von Belichtungsdifferenzen, wobei die ausgeschalteten Leuchtpunkte als graue Pixel dargestellt sind,
- Figur 7d:: eine Addition bzw. Überlagerung des Motivs der ausgeschalteten Leuchtpunkte (14), erzeugt durch den Flächenlichtmodulator und/oder die Maske und den extrahierten Motiveinzelbildern 13a bis 13f, wobei die Maske mit den ausgeschalteten Leuchtpunkten (14) als graue Pixel dargestellt sind und die Leuchtpunkte als schwarze Pixel dargestellt sind. Das aus grauen Pixeln dargestellte Motiv der ausgeschalteten Leuchtpunkte (14, Negativmotiv), ist statisch in allen Motiveinzelbildern als Überlagerung bzw. Subtraktion d.h. des Motivs der dauerhaft ausgeblendete oder geschaltete Leuchtpunkte (14) von den Motiveinzelbildern (13a bis 13f) des zu druckenden Motivs 13 abgezogen und als Überlagerung in den zu belichtenden Motiveinzelbildern (14a, 14b, 14c, 14d, 14e, 14f) dargestellt.
- Figur 8:: Gesamtbaueinheit (0#) umfassend eine Abstreifeinrichtung (20), die an die Baueinheit (0) an- und abkoppelbar ist.

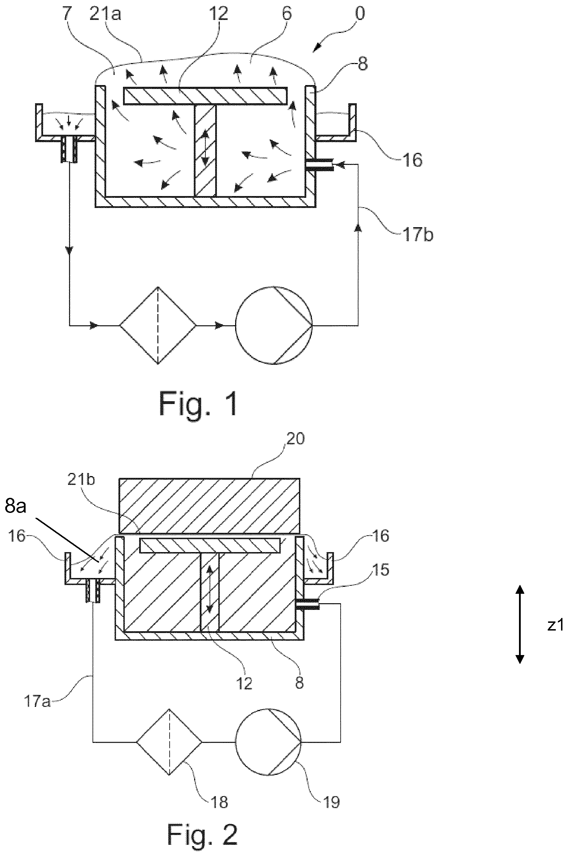

Im erfindungsgemäßen "Belichtungs- und Verfahrensprozess im Stereolithographie Verfahren" erfolgt die Regelung des Niveaus des Füllstands in den Umkehrpunkten des Belichtungsprozesses. In der Zeitspanne, in der die Belichtungseinheit (Baueinheit 0, 0#) abgebremst und wieder angefahren wird, pumpt die Schlauchpumpe 19 (Figur 1, 2) eine ausreichende Menge Harz (polymerisierbaren Kunststoff, Zusammensetzung umfassen Monomere) in den Behälter 8. Diese Menge muss so gewählt sein, dass eine ausreichende Menge an Harz über der Wand 8a des Behälters 8 aufgebaut wird. Es bildet sich die gewölbte Oberfläche 21a (Fig. 1). Durch die Oberflächenspannung des Harzes bzw. Kunststoffs, bleibt diese erhöhte Materialmenge erhalten, bis das Rakel (Abstreifeinrichtung 20) diese abstreift und die Oberfläche glättet. Die Schicht (x1, y1) mit der Projektionsfläche wurde gebildet (Figur 2), diese Schicht entspricht zugleich der Oberfläche 21b. Somit verfährt die Belichtungseinheit (Baueinheit 0, 0#) entlang einer Achse des Behälter und schiebt das Rakel über die Oberfläche und glättet durch Abstreifen des überschüssigen Materials die Oberfläche 21b. Die Oberfläche 21b bildet zugleich die planare Projektionsfläche. Das über die Wand 8a gelaufene Material (Figur 2) wird im Auffangbehälter aufgefangen (Figur 2) und durch eine Absaugöffnung mit Saugleitung 17a wieder in den Pumpkreislauf (Figuren 1 und 2) geführt. Auf diese Weise wird ein immer gleichbleibendes Niveau während des Bauprozesses bzw. Belichtungsphase gewährleistet.

Die Bauplattform 12 (Figuren 1 und 2) wird um eine Schichtdicke gesenkt und der Prozess startet erneut.

Die horizontalen Positionen des Behälters 8 und des Rakels 20 ändern sich während der Bauphase bzw. des Verfahrens nicht. Diese Positionen werden einmal eingestellt und bleiben unverändert. Der Abstand in der Höhe zueinander wird mit einem definierten Wert (dieser liegt im ersten Test bei 0,1mm) eingestellt und ausgerichtet. Der Abstand dient in erster Linie dazu eine mechanische und schwingungsfreie Trennung der beiden Systeme (Beschichtungssystem (Baueinheit, Abstreifeinrichtung) = in Bewegung / Behältersystem = statisch) zu erhalten. Der Abstand sollte nicht größer sein als die Höhe, die von der Flüssigkeit mittels Oberflächenspannung erbracht werden kann. Bevorzugt ist der Abstand gleich oder etwas kleiner.

Der abgestreifte lichthärtende Kunststoff wird mittels einer Saugleitung 17a und einer Schlauchpumpe 19 (Fig.) in den Kreislauf gesaugt und vorzugsweise gefiltert (Filter 18) und dem Behälter 8 (Wanne) erneut zugeführt. Das System ist dicht, um ein Eindringen von Luft in den Kreislauf zu vermeiden. Lufteinschlüsse stören den Polymerisations- bzw. Bauprozess und mindern die Qualität des Formkörpers/Objektes.

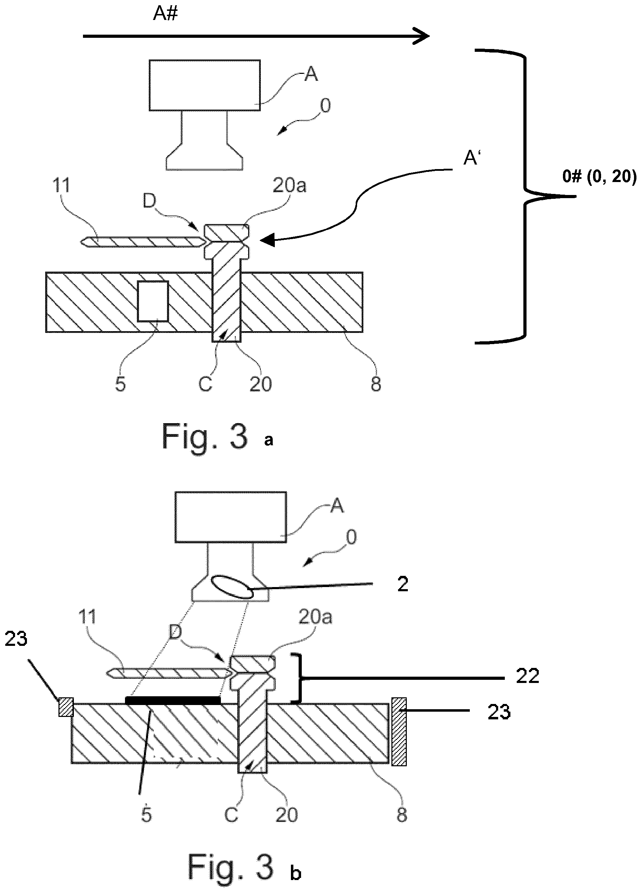

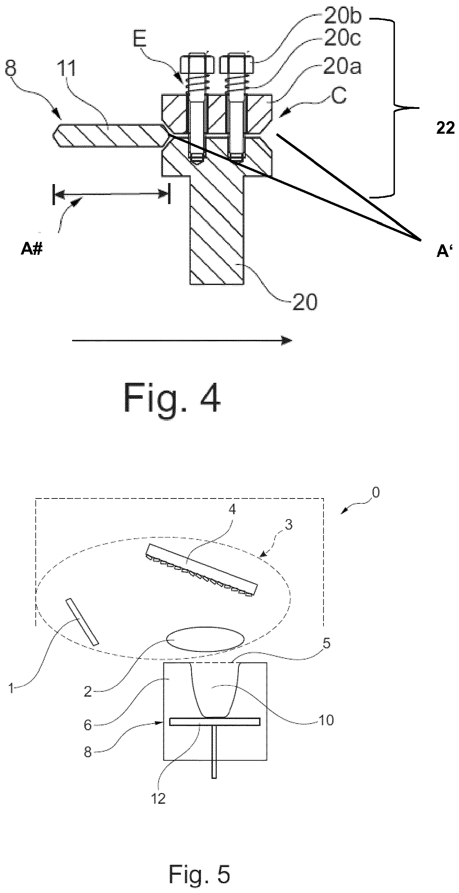

Die Figuren 3a (nicht perspektivisch, schematisch) und 4 stellen schematisch die Koppelvorrichtung 22 zwischen der Baueinheit 0 oder der Lichtquelle 1 und der Abstreifeinrichtung (Rakel) 20 dar. Gemäß Figuren 3a, 3b und 4 ist der Lichtquelle 1 oder der Baueinheit 0 ein Schwert 11 zugeordnet, mit dem diese die Abstreifeinrichtung 20 mittels der Koppelvorrichtung 22 vor sich herschieben können. Die Abstreifeinrichtung ist vor dem Belichtungsfeld 5 der Lichtquelle 1 angeordnet und wird in dem Verfahren vor dem Belichtungsfeld 5, vorzugsweise horizontal, hergeschoben. Die Koppelvorrichtung 22 ist auf der Abstreifeinrichtung oben vorgesehen und umfasst mindestens ein Element 20a, das mit dem oberen Ende der Abstreifeinrichtung, das ebenfalls als Element 20a vorliegen kann, mittels eines elastischen Elements, wie einer Federung 20c und einer Fixierung 20b, verbunden ist. Dem Schwert 11 kann nun im Bereich des Umkehrpunktes des Behälters ein Dämpfer 23 zugeordnet sein, der die Abstreifeinrichtung 20 abbremst. Das Schwert der Baueinheit 0 oder der Lichtquelle 1 wird sodann in die Kerbe A zwischen den beiden Elementen 20a geschoben. Ab einem bestimmten Druck schiebt das Schwert die beiden Elemente 20a auseinander und gleitet zwischen ihnen hindurch. Die Elemente 20a werden durch die elastischen Elemente 20c wieder gegeneinander gedrückt. Beim anschließenden Richtungswechsel (Umkehrpunkt) schiebt das Schwert nun erneut die Abstreifeinrichtung vor sich über den Behälter. Beim anschließendem Richtungswechsel (Umkehrpunkt) schiebt das Schwert 11 nun erneut die Abstreifeinrichtung vor sich über den Behälter. Wenn in dem erfindungsgemäßen Verfahren die Belichtungseinheit 0, 0# mit UV-Beamer 1 (UV-LED-Beamer; in Baueinheit 0, 0#) symmetrisch zum Behälter 8 und in einem definierten Abstand über die Oberfläche 21a, 21b gefahren wird und das Belichtungsfeld 5, vorzugsweise horizontal, über die gebildete Projektionsfläche geführt wird, wird automatisch das Rakel 20 (Abstreifeinrichtung) zum Glätten der Oberfläche vor der Lichtquelle 1 oder vor dem Belichtungsfeld 5 mitgeführt (Schleppverfahren oder Schleppverfahren). Die Fig. 3b zeigt das Belichtungsfeld 5 oben auf dem Kunststoff im Behälter 8. Das Belichtungsfeld 5 kann mittels einer Linse 2 auf die Projektionsfläche bzw. die Oberfläche 21b projiziert werden.

Figur 5 zeigt eine schematische Querschnittansicht eines Aufbaus zur Umsetzung eines erfindungsgemäßen Verfahrens. Ein UV-LED-Beamer 1, der ultraviolettes Licht (UV-Licht) abstrahlt, wird auf einen Flächenlichtmodulator 4 abgestrahlt. Der UV-LED-Beamer 1 hat eine Auflösung von 1920x1080 Pixeln, die als rechteckige Fläche auf der Oberfläche eines Chips des UV-LED-Beamers 1 abstrahlen. Der Flächenlichtmodulator 4 umfasst eine Vielzahl von ansteuerbaren Mikrospiegeln, mit denen das Licht aus dem UV-LED-Beamer 1 reflektiert und mit Hilfe eines Linsensystems 2 auf die Oberfläche eines flüssigen lichthärtenden Kunststoffs 6 abgebildet wird. Die Mikrospiegel sind in Figur 1 als unterschiedlich orientierte kleine Rechtecke an einer Oberfläche des Flächenlichtmodulators 4 dargestellt. Der flüssige Kunststoff 6 ist in einem Behälter 8 angeordnet, der nach oben zum Flächenlichtmodulator 4 beziehungsweise dem Linsensystem 2 offen ist.

Das Linsensystem 2, das in Figur 5 nur als einfache Linse schematisch dargestellt ist, bildet die Fläche der Pixel des UV-LED-Beamers 1 auf die Oberfläche des lichthärtenden Kunststoffs 6 ab. Mit Hilfe eines geeigneten Motors (nicht gezeigt) wird der UV-LED-Beamer 1 über den Behälter 8 gefahren und dadurch die Oberfläche des lichthärtenden Kunststoffs 6 mit dem Belichtungsfeld überstrichen, so dass jede Zeile des Chips des UV-LED-Beamers 1 jeden zu belichtenden Punkt vollständig überfährt beziehungsweise überfahren kann.

Das dadurch entstehende Belichtungsfeld auf der Oberfläche des lichthärtenden Kunststoffs 6 härtet die flüssigen Bestandteile aus, so dass ein fester Kunststoffkörper 10 entsteht. Der feste Kunststoffkörper 10 ist auf einer Halterung 12 gelagert, die langsam nach unten abgesenkt wird, so dass die obere Oberfläche des Kunststoffkörpers 10 von dem flüssigen lichthärtenden Kunststoff 6 benetzt wird und eine neue feste Schicht mit Hilfe des Belichtungsfelds auf dem Kunststoffkörper 10 erzeugt werden kann. Für Details zur Umsetzung sei auf die EP 1 880 830 A1 oder die EP 1 894 705 A2 verwiesen.

Eine Homogenisierung des Lichtfelds und damit des erzeugten Kunststoffkörpers 10 wird dadurch erreicht, dass die in der Mitte des Chips des UV-LED-Beamers 1 angeordneten Pixel nicht verwendet werden, das heißt, dass diese schwarz bleiben.

Zum besseren Verständnis ist eine erfindungsgemäße Verwendung beziehungsweise eine erfindungsgemäße Steuerung eines solchen Chips in Figur 6B gezeigt und wird im Folgenden erläutert.

Figur 6 zeigt einen schematischen Vergleich eines voll belichteten UV-Beamer-Chips (Figur 2A) nach dem Stand der Technik im Vergleich zu einem erfindungsgemäß betriebenen UV-Beamer-Chip (Figur 6B). Der beispielhaft gezeigte UV-LED-Chip hat nur 12x13 Pixel, damit das Grundprinzip der vorliegenden Erfindung einfach veranschaulicht werden kann. In einer realen Ausführung kommen UV-LED-Beamer mit einer wesentlich höheren Auflösung zum Einsatz, wie beispielsweise 1920x1080 Pixel.

Jeder der UV-LED-Chips hat 12 Spalten und 13 Zeilen. Bei dem voll belichteten UV-LED-Chip nach dem Stand der Technik (Figur 6A) werden die inneren Bereiche des Belichtungsfelds mit einer höheren UV-Intensität bestrahlt, als die äußeren Bereiche. In der mittleren Spalte entsteht dadurch die höchste Intensität, die nach außen abnimmt. Aufgrund von Streueffekten und anderen durch die Optik auftretenden Eigenschaften, können die einzelnen Pixel des UV-LED-Beamers nicht beliebig scharf abgebildet werden. Jeder Pixel belichtet also auch die Bereiche des Belichtungsfelds, die eigentlich durch seine benachbarten Pixel belichtet werden müssten. Dadurch erhalten die durch die inneren Pixel bestrahlten Bereiche des Belichtungsfelds eine höhere Intensität als die durch die äußeren Pixel bestrahlten Bereiche des Belichtungsfelds.

Dies wird bezüglich der Spalten (In Figur 6 von oben nach unten) dadurch ausgeglichen, dass der UV-LED-Beamer entlang einer Bewegungsrichtung X über das Belichtungsfeld gefahren wird. Die Bewegungsrichtung X des UV-LED-Beamers beziehungsweise des Belichtungsfelds ist in den beiden Figuren 6A und 6B durch den Pfeil angegeben. Das von den UV-LED-Chips abgestrahlte Bild wird also in Richtung der Zeilen (In Figur 6 von links nach rechts, das heißt entlang des Pfeils X) über das Belichtungsfeld bewegt. Zur Abbildung kann ein DLP^{®} Chip der Firma Texas Instruments eingesetzt werden.

Durch die in Figur 6B gezeigten schwarzen Pixel, die ausgeschaltet bleiben oder die vom Flächenlichtmodulator nicht auf die Oberfläche des flüssigen lichthärtenden Kunststoffs reflektiert werden, wird die Lichtintensität in den verschiedenen Spalten des erfindungsgemäß betriebenen UV-LED-Beamers zur Mitte hin immer stärker reduziert.

Dadurch wird erreicht, dass die mittleren Bereiche des entlang der Bewegungsrichtung X überstrichenen Belichtungsfelds die gleiche Intensität ultravioletter Strahlungsintensität erhalten, wie die äußeren Bereiche (Zeilen).

Die einfachste Ausführung für ein erfindungsgemäßes Verfahren kann dadurch realisiert werden, dass für den Beamer eine Maske hinterlegt wird, die definiert, welche der Pixel nicht eingeschaltet beziehungsweise benutzt werden und daher schwarz bleiben. Alternativ kann aber auch ein Flächenlichtmodulator verwendet werden, der im Bereich der Mitte weniger oder geschwärzte Spiegel aufweist.

In Figur 6B werden nur die äußersten beiden Zeilen mit allen zwölf Pixeln bestrahlt, während für jede Zeile, die dichter an der mittleren Zeile liegt, jeweils ein Pixel weniger leuchtet beziehungsweise abgebildet wird. In der mittleren Zeile sind dann nur noch sechs Pixel aktiv beziehungsweise es werden nur noch sechs Pixel abgebildet. Beim Überstreichen der Belichtungsfläche entlang der Bewegungsrichtung X wird eine mittlere Belichtungsintensität an den belichteten Stellen des Belichtungsfelds erzeugt, die unmittelbar proportional zur Anzahl der verwendeten beziehungsweise abgebildeten Pixel des UV-LED-Beamers ist. Geeignete Beamer können eine Auflösung von bis zu 100.000 oder bis zu 1,5 Millionen Pixel aufweisen. Ebenso können Beamer mit einer Darstellungen in XGA und Super-XGA (SXGA) mit 1.280 x 1.024 Bildpunkten eingesetzt werden.

Um eine gleichmäßig homogenisierte Lichtmengenverteilung auf der Oberfläche des lichthärtenden Kunststoffs beziehungsweise der Projektionsfläche, insbesondere einer planaren Projektionsfläche, zu erzielen, wird das Belichtungsfeld mit einer konstanten Geschwindigkeit über eine Bauplattform geführt. Die Bauplattform ist hier 1.920 x 20.000 Pixel groß (Pixelgröße hier 50 x 50 µm). Während der Bewegung werden Bildausschnitte über das Belichtungsfeld fortlaufend wiedergegeben.

Die einmal definierte Maske, welche im UV-Beamer hinterlegt ist, erzeugt in den einzelnen Zeilen tote (immer schwarze) Pixel. In diesem Fall steigt die Anzahl der in den Zeilen schwarz definierten Pixel zur Mitte hin an, da die mittleren Zeilen konstruktionsbedingt (durch Optik) heller belichtet sind.

Der Effekt ist folgender: Durch die Bewegung des UV-Beamers, wird bei einer Belichtung die komplette Zeile des Belichtungsfeldes angesteuert. So wird beim Überfahren eine maximale UV-Lichtmenge mit 1080 erzeugt. Werden weniger Pixel angesteuert, so wird die Leistung gemindert und es kann so die ungleiche Ausleuchtung der Optik ausgeglichen werden.

Figur 7a zeigt ein zu druckendes Motiv 13, in dem die Leuchtpunkte als schwarze Pixel dargestellt sind. In Figur 7b ist die Abfolge der von der Lichtquelle einzeln dargestellten Bilder (extrahierte Motiveinzelbilder 13a, 13 b, 13c, 13d, 13e, 13f) zur Erzeugung des zu druckenden Motivs 13 während der Bewegung der Lichtquelle oder der Anordnung über die Projektionsfläche (ohne Motiv der ausgeschalteten Leuchtpunkte und/oder ohne Maske) dargestellt. Die Leuchtpunkte sind als schwarze Pixel dargestellt. In Figur 7c ist das Motiv der ausgeschalteten Leuchtpunkte 14 wiedergegeben. Das Motiv der ausgeschalteten Leuchtpunkte wird durch den Flächenlichtmodulator und/oder die Maske erzeugt. Die ausgeschalteten Leuchtpunkte sind als graue Pixel dargestellt. So können durch den Flächenlichtmodulator Leuchtpunkte ausgeschaltet oder umgelenkt werden, um ein Angleichen von Belichtungsdifferenzen zu erzielen.

In Figur 7d ist die Überlagerung des Motivs der ausgeschalteten Leuchtpunkte 14, insbesondere des statischen Motivs, erzeugt durch den Flächenlichtmodulator und/oder die Maske und den extrahierten Motiveinzelbildern 13a bis 13f dargestellt. Das Motiv der ausgeschalteten Leuchtpunkten 14 oder die Maske sind als graue Pixel dargestellt. Die belichteten Pixel im Belichtungsfeld sind als schwarze Pixel dargestellt und bilden die zu belichtenden Motiveinzelbilder (14a, 14, b, 14c, 14d, 14e, 14f).

Figur 8 stellt dar die Gesamtbaueinheit (0#) umfassend eine Abstreifeinrichtung 20, die an die Baueinheit 0 an- und abkoppelbar ist. Die Lichtquelle 1, oder mindestens das Belichtungsgeld 5 der Lichtquelle 1 wird zur Polymerisation des Kunststoffes 6 vor der Gesamtbaueinheit 0# oder der Baueinheit 0 hinter der Abstreifeinrichtung 20 hergeführt. Die Abstreifeinrichtung 20 ist, insbesondere über die Kupplungsvorrichtung 22, mit der Lichtquelle 1 oder dem Belichtungsfeld 5 der Lichtquelle 5 koppelbar und wird vor der Lichtquelle 1 oder dem Belichtungsfeld 5 hergeführt.

### Bezugszeichenliste

0 Baueinheit umfassend Lichtquelle (1) bzw. (A), wie UV-LED-Beamer (1) oder Lasersystem, Optik, insbesondere Linsensystem (2), Flächenlichtmodulator (4),
0# Gesamte Baueinheit bzw. Gesamtbaueinheit umfassend: Abstreifeinrichtung (20) und Baueinheit (0) umfassend Lichtquelle (1), wie UV- LED-Beamer (1) oder Lasersystem, Optik, insbesondere Linsensystem (2), Flächenlichtmodulator (4), wobei die Abstreifeinrichtung an die Baueinheit (0) koppel- oder entkoppelbar ist
1 UV-LED-Beamer
2 Linsensystem
3 Anordnung der flächigen Lichtquelle (1), des Flächenlichtmodulator (4) und/oder der Linsensystem/Optik (2)
4 Flächenlichtmodulator
5 Belichtungsfeld
6 Lichthärtender flüssiger Kunststoff, insbesondere Mischung umfassend Monomere, Zusammensetzung umfassend dentale Monomere
7 Bad
8 Behälter
10 ausgehärteter lichthärtender Kunststoff / Kunststoffkörper
11 Schwert, das Schwert hat vorzugsweise eine an die Koppelvorrichtung bzw. Kerbe A angepasste Geometrie
12 Halterung, Bauplattform
13 zu druckendes Motiv
13a bis 13f einzeln dargestellten Bilder zur Erzeugung des zu druckenden Motivs
14 Motiv der ausgeschalteten Leuchtpunkte/Motiv nicht belichtete Pixel
14a bis14f zu belichtende Motiveinzelbilder mit homogenisierter Lichtmengenverteilung. Einzeln dargestellten Bilder (14a, 14b, 14c, 14d, 14e, 14f) zur Erzeugung des zu druckenden Motivs 13, dargestellt als einzeln dargestellte Bilder (13a, 13b, 13c, 13d, 13e, 13f) zur Erzeugung des zu druckenden Motivs beim Scrollen mit einer statischen Überlagerung des Motivs der ausgeschalteten Leuchtpunkte (14)
15 Zuführeinrichtung
16 Auffangbehälter
17 Leitung, 17a Saugleitung, 17b Zuführleitung
18 Filter
19 Pumpe, insbesondere Schlauchpumpe
20 Abstreifeinrichtung, Rakel (C)
20a Element, insbesondere Platte
20b Fixierung, insbesondere Schraube (E)
20c Elastisches Element, insbesondere Federung
21a Oberfläche Bad während Überlauf Kunststoff in Auffangbehälter,
21b Oberfläche (planare Oberfläche) Bad entsprechend zur Belichtung oder nach Einstellung der Oberfläche mittels Abstreifeinrichtung, Rakel. Die Oberfläche 21b entspricht zumindest teilweise der Projektionsfläche bzw. ist die Oberfläche der zu polymerisierenden Schicht (x1, y1).
22 Koppelvorrichtung, A' Kerbe, insbesondere umfassend 20a, 20b, 20c und 20 oder oberen Teil an einem Rakel 20
23 Dämpfer
A' Kerbe; A# Bewegungsrichtung; D Schleppverfahren, E mittels Stiftschrauben gehaltene Druckfedern, z1: Schichtdicke; x,y; x1,y1: Schicht als Ebene

## Patentansprüche

1. Vorrichtung, umfassend eine Baueinheit (0) mit einer Lichtquelle (1), zum Herstellen eines dreidimensionalen Objektes (10) mittels Belichtung eines flüssigen, lichthärtenden Kunststoffes (6), mit einem Behälter (8) zur Aufnahme eines Bades (7) des lichthärtenden, flüssigen Kunststoffes (6), mit einer Bauplattform (12) zur Positionierung des Objektes (10) relativ zur Oberfläche (21a, 21b) des Bades (7), wobei
dem Behälter (8) eine Zuführeinrichtung (15) zum Zuführen des flüssigen, lichthärtenden Kunststoffes (6) zugeordnet ist,
wobei dem Behälter (8) mindestens ein Auffangbehälter (16) zugeordnet ist, in den der flüssige, lichthärtende Kunststoff (6) mittels einer entlang einer Achse des Behälters verfahrbaren Abstreifeinrichtung (20) überführbar ist,
wobei
die Baueinheit (0) zum Herstellen einer homogenisierten Lichtmengenverteilung dient und eine Anordnung (3) aufweist, die eine flächig abstrahlende Lichtquelle (1), einen Flächenlichtmodulator (4) und eine Optik (2) umfasst,
**dadurch gekennzeichnet, dass**
die entlang einer Achse des Behälters verfahrbare Abstreifeinrichtung (20) und die flächig abstrahlende Lichtquelle (1) entlang der Achse des Behälters simultan mit einer definierten Beabstandung über den flüssigen, lichthärtenden Kunststoff führbar sind,
und wobei die Abstreifeinrichtung in einem definierten Abstand unmittelbar vor der flächig abstrahlenden Lichtquelle (1) herführbar ist und die Projektionsfläche für ein Belichtungsfeld der flächig abstrahlenden Lichtquelle (1) ausbildet,
wobei die flächig abstrahlende Lichtquelle (1), zusammen mit dem über die Optik abgebildeten Belichtungsfeld der abgebildeten Lichtquelle (1) über die Projektionsfläche führbar ist**.**

2. Vorrichtung nach Anspruch 1, **dadurch gekennzeichnet, dass** ein Linsensystem die Optik (2) bildet.

3. Vorrichtung nach Anspruch 1, **dadurch gekennzeichnet, dass** die Zuführeinrichtung (15) unterhalb der Oberfläche (21) des Bades (7) dem Behälter zugeordnet ist.

4. Vorrichtung nach einem der Ansprüche 1 bis 3, **dadurch gekennzeichnet, dass** der flüssige, lichthärtende Kunststoff (6), insbesondere der überstehende Kunststoff der gewölbten Oberfläche (21a), mittels einer entlang einer Achse des Behälters verfahrbaren Abstreifeinrichtung (20) in den mindestens einen Auffangbehälter (16) überführbar ist, wobei sich eine Oberfläche (21b) als Projektionsfläche bildet.

5. Vorrichtung nach einem der Ansprüche 1 bis 4, **dadurch gekennzeichnet, dass** der flüssige, lichthärtende Kunststoff (6) aus dem Auffangbehälter (16) mittels einer Saugleitung (17a), insbesondere durch einen Filter (18), mittels einer Pumpe (19) über die Zuführeinrichtung (15) erneut dem Bad (7) zugeführt wird.

6. Vorrichtung nach einem der Ansprüche 1 bis 5, **dadurch gekennzeichnet, dass** eine Gesamtbaueinheit (0#) eine entlang einer Achse des Behälters verfahrbare Abstreifeinrichtung (20) und die Baueinheit (0) umfasst, wobei sich die Abstreifeinrichtung (20) vor der Lichtquelle (1) und/oder dem Belichtungsfeld (5), insbesondere der Baueinheit (0), befindet.

7. Verfahren mit einer Vorrichtung nach einem der Ansprüche 1 bis 6 zum Herstellen eines dreidimensionalen Objektes (10) mittels Belichtung eines flüssigen, lichthärtenden Kunststoffes (6), wobei das dreidimensionale Objekt (10) schichtweise erzeugt wird, indem jeweils eine Schicht (x1, y1) als Projektionsfläche des flüssigen, lichthärtenden Kunststoffes (6) hergestellt wird, und in einem Belichtungsfeld (5) zumindest teilweise mittels Licht einer flächig abstrahlenden Lichtquelle (1) polymerisiert wird,
**dadurch gekennzeichnet, dass**
a) eine Schicht (x, y) des flüssigen, lichthärtenden Kunststoffes (6) auf einer Bauplattform (12) oder einer polymerisierten Schicht erzeugt wird, indem in einem Bad (7) des flüssigen, lichthärtenden Kunststoffs (6) die Menge des Kunststoffes so eingestellt wird, dass der Kunststoff an der Oberkante der Wände (8a) des Behälter (8) in der Höhe durch die Oberflächenspannung des Kunststoffes übersteht und sich eine gewölbte Oberfläche (21a) ausbildet, und optional der Kunststoff in den mindestens einen seitlich des Behälter (8) angeordneten Auffangbehälter (16) fließt, nachfolgend wird
b) der überstehende, flüssige, lichthärtende Kunststoff (6) der gewölbten Oberfläche (21a) mittels einer entlang einer Achse des Behälters verfahrbaren Abstreifeinrichtung (20) entfernt, und es wird eine zu polymerisierende Schicht (x1, y1) als Projektionsfläche (21b) erhalten und optional wird,
c) die in b) erzeugte zu polymerisierende Schicht (x1, y1) als Projektionsfläche des flüssigen, lichthärtenden Kunststoffes (6) mit einem Belichtungsfeld mittels Licht der flächig abstrahlenden Lichtquelle (1) polymerisiert, und optional
d) wird die Bauplattform (12) um eine Schichtdicke (x1, y1) abgesenkt und optional
e) mindestens ein- bis mehrmaliges Wiederholen der Schritte a) bis d).

8. Verfahren nach Anspruch 7, **dadurch gekennzeichnet, dass** die Schritte b) und c) simultan erfolgen.

9. Verfahren nach Anspruch 7 oder 8, **dadurch gekennzeichnet, dass** die verfahrbare Abstreifeinrichtung (20) und die Lichtquelle (1), insbesondere die Lichtquelle der Baueinheit (0), eine koppel- und entkoppelbare verfahrbare Baueinheit (0#) bilden.

10. Verfahren nach einem der Ansprüche 7 bis 9, **dadurch gekennzeichnet, dass** die Gesamtbaueinheit (0#) eine verfahrbare Abstreifeinrichtung (20) und eine Baueinheit (0) aufweist, wobei die Baueinheit (0) eine Anordnung (3) aufweist, umfassend eine flächig abstrahlende Lichtquelle (1), einen Flächenlichtmodulator (4) und die Optik (2), insbesondere bildet ein Linsensystem die Optik (2).

11. Verfahren nach einem der Ansprüche 7 bis 10, **dadurch gekennzeichnet, dass** Schritt a) durchgeführt wird,
i) nachdem der Schritt d) durchgeführt wurde, oder
ii) nachdem der Schritt c) und vorzugsweise d) durchgeführt wurden, oder
iii) nachdem die verfahrbare Abstreifeinrichtung (20), die Lichtquelle (1) oder die gesamte Baueinheit (0#) über das Belichtungsfeld geführt wurden und sich außerhalb des Belichtungsfeldes befinden, oder
iv) nachdem die verfahrbare Abstreifeinrichtung (20), die Lichtquelle (1) oder die gesamte Baueinheit (0#) sich an einem vorderen oder hinteren Ende des Behälters (8), insbesondere im Bereich des Umkehrpunktes, befinden.

12. Verfahren nach einem der Ansprüche 7 bis 11, **dadurch gekennzeichnet, dass** die Gesamtbaueinheit (0#) oder die Baueinheit (0) zur Homogenisierung der Lichtmengenverteilung einen Flächenlichtmodulator (4) aufweist, der eine Vielzahl von in Reihen und Spalten angeordneten ansteuerbaren kippbaren Mikrospiegeln aufweist, bei dem das Licht einer flächig abstrahlenden Lichtquelle (1) über eine Optik (2) abgebildet wird und ein Belichtungsfeld der abgebildeten Lichtquelle (1) über eine Projektionsfläche geführt wird, wobei eine zur Mitte des Belichtungsfelds hin zunehmende Anzahl von Pixeln nicht belichtet wird, so dass im zeitlichen Integral eine Homogenisierung der Lichtintensität aller auf der Projektionsfläche belichteten Pixel erreicht wird.

13. Verfahren nach einem der Ansprüche 7 bis 12, **dadurch gekennzeichnet, dass** die Gesamtbaueinheit (0#) oder die Baueinheit (0) und damit das Belichtungsfeld und die Abstreifeinrichtung (20) simultan periodisch über die Projektionsfläche geführt wird, wobei vorzugsweise als Projektionsfläche die Oberfläche (21b) eines flüssigen lichthärtenden Kunststoffs (10) verwendet wird.

14. Verfahren nach einem der Ansprüche 7 bis 13, **dadurch gekennzeichnet, dass** es zur Herstellung von zumindest Teilen dentaler prothetischer Versorgungen verwendet wird.

15. Rapid-Prototyping-Verfahren, bei dem ein flüssiger, lichthärtender Kunststoff (10) mit einem Verfahren nach einem der vorangehenden Ansprüche 7 bis 14 mit UV-Licht belichtet wird, wobei die Abstreifeinrichtung (20) simultan zusammen mit dem Belichtungsfeld (5) vor dem Belichtungsfeld entlang einer Achse des Behälters geführt wird, um die zu polymerisierende Schicht (x1, y1) des Kunststoffs (10) als Projektionsfläche (21b) zu bilden auf der das Belichtungsfeld abgebildet wird und der Kunststoff (10) durch die Belichtung im Belichtungsfeld polymerisiert.

## Claims

1. Device comprising an assembly (0) with a light source (1), for production of a three-dimensional object (10) by means of illuminating a liquid light-curing plastic material (6), having a container (8) for accommodation of a bath (7) of the light-curing liquid plastic material (6), having a building platform (12) for positioning the object (10) relative to the surface (21a, 21b) of the bath (7),
wherein the container (8) has assigned to it a feeding device (15) for feeding the liquid light-curing plastic material (6),
wherein at least one collecting container (16) is assigned to the container (8) into which the liquid light-curing plastic material (6) is transferable by means of a stripping device (20) that is drivable along an axis of the container,
wherein in that the assembly (0) serves for producing a homogenised distribution of light intensity and exhibits an arrangement (3) that comprises a spatially emitting light source (1), a spatial light modulator (4), and an optical system (2),
**characterised in that**,
the stripping device (20) that is drivable along the axis of the container (16) and the spatially emitting light source (1) are simultaneously guidable, at a defined distance, across the liquid light-curing plastic material, whereby the stripping device is guidable at a defined distance right ahead of the light source (1) and forms the projection surface for the illuminated field of the light source (1),
wherein the spatially emitting light source (1) is guidable across a projection surface together with the illuminated field of the projected light source (1).

2. Device according to claim 1, **characterised in that**, the optical system (2) being a lens system.

3. Device according to claim 1, **characterised in that** the feeding device (15) at a level below the surface (21) of the bath (7) is assigned to the container.

4. Device according to any one of the claims 1 or 3, **characterised in that** the liquid light-curing plastic material (6), in particular the protruding plastic material of the arched surface (21a) is transferable into the at least one collecting container (16) by means of a stripping device (20) that is drivable along an axis of the container, whereby, a surface (21b) is formed as projection surface.

5. Device according to any one of the claims 1 to 4, **characterised in that** the liquid light-curing plastic material (6) is fed again from the collecting container (16) via the feeding device (15) to the bath (7) by means of a suction line (17a), in particular through a filter (18), by means of a pump (19).

6. Device according to any one of the claims 1 to 5, **characterised in that** an entire assembly (0#) comprises a stripping device (20) that is drivable along an axis of the container, and the assembly (0), whereby the stripping device (20) is situated in front of the light source (1) and/or of the illuminated field (5), in particular of the assembly (0).

7. Method for producing a three-dimensional object (10) with a device according to any of claims 1 to 6, in which the three-dimensional object is generated layer-by-layer, by one layer (x1, y1) each being produced as a projection surface of a liquid light-curing plastic material (6) and being polymerised in an illuminated field (5), at least in part, by light of a light source (1),
**characterised in that**
a) a layer (x, y) of the liquid light-curing plastic material (6) is generated on a building platform (12) or on a polymerised layer by the amount of the plastic material being appropriately adjusted in a bath (7) of the liquid light-curing plastic material (6) such that the plastic material protrudes vertically at the upper edge of the walls (8a) of the container (8) due to the surface tension of the plastic material, and an arched surface (21a) of the protruding plastic material is formed, and, optionally, the plastic material flows into the at least one collecting container (16) arranged on the side of the container (8), followed by
b) the protruding liquid light-curing plastic material (6) of the arched surface (21a) being removed by a stripping device (20) that is drivable along an axis of the container and a layer to be polymerised (x1, y1) being obtained as projection surface (21b), and, optionally,
c) the layer to be polymerised (x1, y1) generated in b) is polymerised as projection surface of the liquid light-curing plastic material (6) by an illuminated field by light of the light source (1), and, optionally,
d) lowering the building platform (12) by one layer thickness (x1, y1) and, optionally,
e) steps a) to d) are being repeated at least one to multiple times.

8. Method according to claim 7, **characterised in that** steps b) and c) take place simultaneously.

9. Method according to claim 7 or 8, **characterised in that** the drivable stripping device (20) and the light source (1), in particular the light source of the assembly (0), form a drivable entire assembly (0#) that can be coupled and uncoupled.

10. Method according to any one of the claims 7 to 9, **characterised in that** the entire assembly (0#) comprises a drivable stripping device (20) and an assembly (0), whereby the assembly (0) comprises an arrangement (3) comprising a spatially emitting light source (1), a spatial light modulator (4), and the optical system (2), in particular with the optical system (2) being a lens system.

11. Method according to any one of the claims 7 to 10, **characterised in that** step a) is performed
i) after performing step d), or
i) after performing step c) and, preferably, d), or
iii) after the drivable stripping device (20), the light source (1) or the entire assembly (0#) have been guided across the illuminated field and are situated outside of the illuminated field or
iv) after the drivable stripping device (20), the light source (1) or the entire assembly (0#) have become situated at a front or rear end of the container (8), in particular in the region of the reversal point.

12. Method according to any one of the claims 7 to 11, **characterised in that** the entire assembly (0#) or the assembly (0) for homogenising the distribution of light intensity comprises a spatial light modulator (4) that comprises a multitude of controllable and tiltable micro-mirrors that are arranged in rows and columns, in which the light of a spatially emitting light source (1) is projected by means of an optical system (2) and an illuminated field of the projected light source (1) is guided across a projection surface, whereby, towards the middle of the illuminated field, an increasing number of pixels is not being illuminated such that a homogenisation of the light intensity of all pixels that are illuminated on the projection surface is attained in the time integral.

13. Method according to any one of the claims 7 to 12, **characterised in that** the entire assembly (0#) or the assembly (0) and thus the illuminated field and the stripping device (20) are simultaneously periodically guided across the projection surface, whereby, preferably, the surface (21b) of a liquid light-curing plastic material (6) is used as projection surface.

14. Method according to any of claims 7 to 13, **characterised in that** it is used for the production of at least parts of dental prosthetic restorations.

15. Rapid prototyping method, in which a liquid light-curing plastic material (6) is illuminated by means of a method according to any one of the preceding claims 7 to 14, is illuminated with UV light, whereby the stripping device (20) is guided simultaneously and together with the illuminated field (5) ahead of the illuminated field along an axis of the container in order to form the layer to be polymerised (x1, y1) of the plastic material (10) as projection surface (21b) onto which the illuminated field is projected and on which the plastic material (10) polymerises due to the illumination in the illuminated field.

## Revendications

1. Dispositif comprenant une unité modulaire (0) avec une source lumineuse (1), pour la fabrication d'un objet tridimensionnel (10) par exposition à la lumière d'une résine liquide photopolymérisable (6), un récipient (8) destiné à recevoir un bain (7) de la résine liquide photopolymérisable (6) et une plate-forme modulaire (12) pour le positionnement de l'objet (10) par rapport à la surface (21a, 21b) du bain (7),
un dispositif d'alimentation (15) pour l'alimentation en résine liquide photopolymérisable (6) étant associé au récipient (8),
au moins un récipient collecteur (16), dans lequel la résine liquide photopolymérisable (6) peut être transférée au moyen d'un dispositif de raclage (20) déplaçable le long d'un axe du récipient, étant associé au récipient (8),
l'unité modulaire (0) servant à produire une répartition homogénéisée de la lumière et présentant une disposition (3) qui comprend une source lumineuse (1) émettant en surface, un modulateur de lumière en surface (4) et une optique (2),
**caractérisé en ce que** le dispositif de raclage (20) déplaçable le long d'un axe du récipient et la source lumineuse (1) émettant en surface peuvent être guidés simultanément le long de l'axe du récipient avec un espacement défini au-dessus de la résine liquide photopolymérisable et le dispositif de raclage pouvant être amené à une distance définie directement devant la source lumineuse (1) émettant en surface, et formant la surface de projection pour un champ d'exposition de la source lumineuse (1) émettant en surface,
la source lumineuse (1) émettant en surface pouvant être guidée au-dessus de la surface de projection conjointement avec le champ d'exposition de la source lumineuse (1) reproduite par l'optique.

2. Dispositif selon la revendication 1, **caractérisé en ce que** l'optique (2) est constituée d'un système de lentilles.

3. Dispositif selon la revendication 1, **caractérisé en ce que** le dispositif d'alimentation (15) est associé au récipient en dessous de la surface (21) du bain (7).

4. Dispositif selon l'une des revendications 1 à 3, **caractérisé en ce que** la résine liquide photopolymérisable (6), en particulier la résine dépassant de la surface bombée (21a), peut être transférée dans l'au moins un récipient collecteur (16) au moyen d'un dispositif de raclage (20) déplaçable le long d'un axe du récipient, une surface (21b) se formant comme surface de projection.

5. Dispositif selon l'une des revendications 1 à 4, **caractérisé en ce que** la résine liquide photopolymérisable (6) est à nouveau amenée du récipient collecteur (16) au bain (7) au moyen d'un conduit d'aspiration (17a), en particulier à travers un filtre (18), au moyen d'une pompe (19) via le dispositif d'alimentation (15).

6. Dispositif selon l'une des revendications 1 à 5, **caractérisé en ce qu'**une unité modulaire globale (0#) comprend un dispositif de raclage (20) déplaçable le long d'un axe du récipient et l'unité modulaire (0), le dispositif de raclage (20) se trouvant devant la source lumineuse (1) et/ou le champ d'exposition (5), en particulier l'unité modulaire (0).

7. Procédé utilisant un dispositif selon l'une des revendications 1 à 6 pour la fabrication d'un objet tridimensionnel (10) par exposition à la lumière d'une résine liquide photopolymérisable (6), l'objet tridimensionnel (10) étant produit par couches, par la fabrication respective d'une couche (x1, y1) comme surface de projection de la résine liquide photopolymérisable (6), et étant polymérisé dans un champ d'exposition (5) au moins partiellement par la lumière d'une source lumineuse (1) émettant en surface,
**caractérisé en ce que**
a) une couche (x, y) de résine liquide photopolymérisable (6) est produite sur une plate-forme modulaire (12) ou une couche polymérisée par l'ajustement de la quantité de résine dans un bain (7) de résine liquide photopolymérisable (6), de sorte que la résine dépasse en hauteur au niveau du bord supérieur des parois (8a) du récipient (8) sous l'effet de la tension superficielle de la résine et qu'il se forme une surface bombée (21a), suivi en option, de l'écoulement de la résine dans l'au moins un récipient collecteur (16) disposé sur le côté du récipient (8),
b) la résine liquide photopolymérisable (6) qui dépasse de la surface bombée (21a) est éliminée au moyen d'un dispositif de raclage (20) déplaçable le long d'un axe du récipient, et une couche à polymériser (x1, y1) obtenue comme surface de projection (21b) devient facultative,
c) la couche à polymériser (x1, y1) produite en b) est polymérisée en tant que surface de projection de la résine liquide photopolymérisable (6) avec un champ d'exposition par la lumière de la source lumineuse (1) émettant en surface, et facultativement
d) la plate-forme modulaire (12) est abaissée d'une épaisseur de couche (x1, y1) et, facultativement
e) les étapes a) à d) sont répétées au moins une à plusieurs fois.

8. Procédé selon la revendication 7, **caractérisé en ce que** les étapes b) et c) sont effectuées simultanément.

9. Procédé selon la revendication 7 ou 8, **caractérisé en ce que** le dispositif de raclage (20) déplaçable et la source lumineuse (1), en particulier la source lumineuse de l'unité modulaire (0), forment une unité modulaire déplaçable (0#), pouvant être couplée et découplée.

10. Procédé selon l'une des revendications 7 à 9, **caractérisé en ce que** l'unité modulaire globale (0#) comporte un dispositif de raclage (20) déplaçable et une unité modulaire (0), l'unité modulaire (0) présentant une disposition (3) comprenant une source lumineuse (1) émettant en surface, un modulateur de lumière en surface (4) et l'optique (2), l'optique (2) étant notamment constituée d'un système de lentilles.

11. Procédé selon l'une des revendications 7 à 10, **caractérisé en ce que** l'étape a) est effectuée,
i) après que l'étape d) a été effectuée, ou
ii) après que l'étape c) et, de préférence, l'étape d) ont été effectuées, ou
iii) après que le dispositif de raclage (20) déplaçable, la source lumineuse (1) ou l'unité modulaire globale (0#) ont été guidés au-dessus du champ d'exposition et se trouvent en dehors du champ d'exposition, ou
iv) après que le dispositif de raclage (20) déplaçable, la source lumineuse (1) ou l'unité modulaire globale (0#) se trouvent à une extrémité avant ou arrière du récipient (8), en particulier dans la zone du point d'inversion.

12. Procédé selon l'une des revendications 7 à 11, **caractérisé en ce que** l'unité modulaire globale (0#) ou l'unité modulaire (0) présente, pour l'homogénéisation de la répartition de la lumière, un modulateur de lumière surfacique (4) qui présente une pluralité de micromiroirs basculants pouvant être commandés et disposés en rangées et en colonnes, dans lequel la lumière d'une source lumineuse (1) émettant en surface est reproduite par une optique (2) et un champ d'exposition de la source lumineuse reproduite (1) est guidé au-dessus d'une surface de projection, un nombre croissant de pixels vers le centre du champ d'exposition n'étant pas exposé, ce qui fait que l'on obtient une homogénéisation de l'intensité lumineuse de tous les pixels exposés sur la surface de projection dans l'intégrale temporelle.

13. Procédé selon l'une des revendications 7 à 12, **caractérisé en ce que** l'unité modulaire globale (0#) ou l'unité modulaire (0) et donc le champ d'exposition et le dispositif de raclage (20) sont guidés simultanément et périodiquement au-dessus de la surface de projection, la surface (21b) d'une résine liquide photopolymérisable (10) étant de préférence utilisée comme surface de projection.

14. Procédé selon l'une des revendications 7 à 13, **caractérisé en ce qu'**il est utilisé pour la fabrication d'au moins des parties de restaurations prothétiques dentaires.

15. Procédé de prototypage rapide, dans lequel une résine liquide photopolymérisable (10) est exposée à la lumière ultraviolette par un procédé selon l'une des revendications précédentes 7 à 14, le dispositif de raclage (20) étant guidé simultanément avec le champ d'exposition (5) devant le champ d'exposition le long d'un axe du récipient, pour former la couche à polymériser (x1, y1) de la résine (10) comme surface de projection (21b) sur laquelle le champ d'exposition est reproduit et la résine (10) se polymérise par l'exposition dans le champ d'exposition.
